# EUROPEAN PATENT SPECIFICATION

(11) **EP 2 722 214 B1**
(45) Date of publication and mention of the grant of the patent: **23.09.2015**
(21) Application number: 13188649.1
(22) Date of filing: 15.10.2013
(51) Int. Cl.: B60K 26/02, B62D 1/04

(54) **Manual control device for a motor-vehicle accelerator**
Handbedienungsvorrichtung für einen Kraftfahrzeugbeschleuniger
Dispositif de commande manuelle d'un accélérateur de véhicule à moteur

(30) Priority: 16.10.2012 IT TO20120912
(43) Date of publication of application: 23.04.2014
(73) Proprietor: Carrozzeria 71 S.r.L., 14036 Moncalvo (Asti) (IT)
(72) Inventor: Nosenzo, Fausto, 14036 Moncalvo (Asti) (IT)
(74) Representative: Buzzi, Franco

(56) References cited:
- EP-A1- 1 400 429
- WO-A1-2011/037441
- US-A- 578 852
- US-A- 3 358 527
- US-A1- 2003 230 161

## Description

### Field of the invention

The present invention relates to devices for manual control of the accelerator of a motor vehicle, in particular for disabled drivers or in any case persons who are unable to use a normal accelerator pedal.

### Prior art:

Known and available on the market are a wide EP1400429 is an example of a generic document of claim 1. range of types of manually operated accelerator controls, which may basically be divided into two categories.

In a first category, the manual control device consists of a small wheel or ring set coaxially in front of or else behind the steering wheel and coupled in rotation therewith. The flywheel can be displaced axially with respect to the steering wheel so as to actuate a linear or rotary potentiometer, which is in turn operatively connected to an electrical or electronic system for actuating the accelerator in response to the position of the flywheel set manually by the driver. A control device of this sort is described and illustrated for example in the European patent No. EP-0699552 B1, filed in the name of Haag.

Manual control devices of the second category instead use a control lever, which can normally be displaced angularly with respect a fixed support set in the vicinity of the steering wheel as in the case of the document GB-2290509, or else in a different area within the passenger compartment readily accessible by the driver for its manual actuation, as in the case of the documents US-6749535 B2 and WO-2011/033547. Also in these cases, the control lever is operatively connected to an electrical or electronic system for actuating the accelerator of the vehicle.

These known manual control devices, of both categories, present various drawbacks.

In the first place, they require, for their installation, more or less important structural modifications of the vehicle in the area of the driving seat, and consequent relatively complex and lengthy operations of installation. In the second place, they must necessarily be configured so that they can be adapted to the various models of vehicles for which installation is required.

A further drawback, which is particularly critical in relation to manual control devices of the first category, regards the need to prevent any interference with the airbag, with which all steering wheels are by now equipped.

As regards then devices belonging to the second category, there is also a problem of safety due to the fact that, to be able to actuate the accelerator with one hand, the driver can only manoeuvre the steering wheel with the other hand, with the difficulty and consequent risks for safety that may derive therefrom.

It has recently been proposed by the company Fadiel Italiana (www.fadiel.com) a manually operated accelerator consisting of a grip carrying a pushbutton that can be operated by the pressure exerted by the a driver's finger. In this case, it is possible for the driver to grip the steering wheel with both hands, but the hand with which the pushbutton is operated is not able to obtain a sufficiently firm and secure grip on the steering wheel so that the problem regarding safety is not solved at all.

From US-3358527 a manual control device for a motor vehicle accelerator is known, including a wrist attachment adapted to be removably secured to the driver's arm.

### Summary of the invention

The object of the present invention is to overcome the above drawbacks, and to provide a device for manual control of the accelerator of a motor vehicle that will not require either structural modifications of the steering wheel or of other parts of the driving area of the vehicle, or particular operations of installation, and that may be operated in a practical, convenient, and safe way by the driver keeping both hands on the steering wheel and without any constraint or limitation regarding proper operation of the airbag associated to the steering wheel itself.

With a view to achieving the above objects, the subject of the invention is a device for manual control of the accelerator of a motor vehicle, of the type defined in the preamble of Claim 1, the basic characteristic of which lies in the fact that the mobile actuating member is configured for being removably and stably applied to a driver's finger and is connected to a resting base that can be positioned against a reaction surface preferably constituted by the steering wheel of the vehicle.

According to a preferred embodiment the invention, the mobile actuating member consists of a thrust lever articulated to the above resting base for actuation of an angular-position transducer.

The angular-position transducer may be of any suitable type, and preferably of the Hall-effect type. Its operative connection to the electrical or electronic system for actuating the accelerator can be obtained in a wired mode or else, more conveniently, in wireless mode.

For application of the device to the user's finger, preferably the thumb, there may be provided a simple band that opened and reclosed, for example by means of a microhook closing system (Velcro^{®}), obviously adjustable according to the dimensions of the user's finger.

Alternatively, the device can be permanently applied to a glove that can be worn by the user, also in this case provided in different sizes.

### Brief description of the drawings

The invention will now be described in detail with reference to the annexed drawings, which are provided purely by way of non-limiting example and in which:
- Figure 1 is a schematic perspective view that illustrates an example of actuation of the manual control device for a motor-vehicle accelerator according to the invention, represented in its configuration of use; and

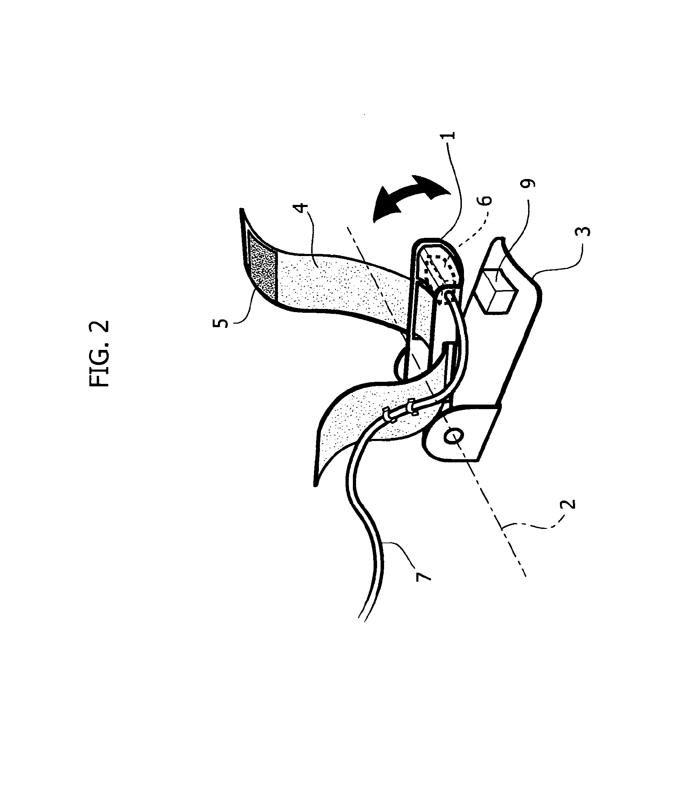

- Figure 2 is a perspective view at a larger scale that shows the manual control device according to the invention from a different angle, prior to its application.

### Detailed description of the invention

With reference to the drawings, in a possible embodiment the device according to the invention for manual control of the accelerator of a motor vehicle basically consists of a mobile control member 1 constituted by a thrust lever, which is as a whole concave and shaped like a cradle, articulated around an axis 2 to a base 3 so as to be angularly displaceable with respect to the latter. Set between the lever 1 and the base 3 is an elastic-return member (not represented in the drawings) tending to keep the lever 1 in an angular resting position in which it is set at a distance from the base 3, in the way represented in the drawings.

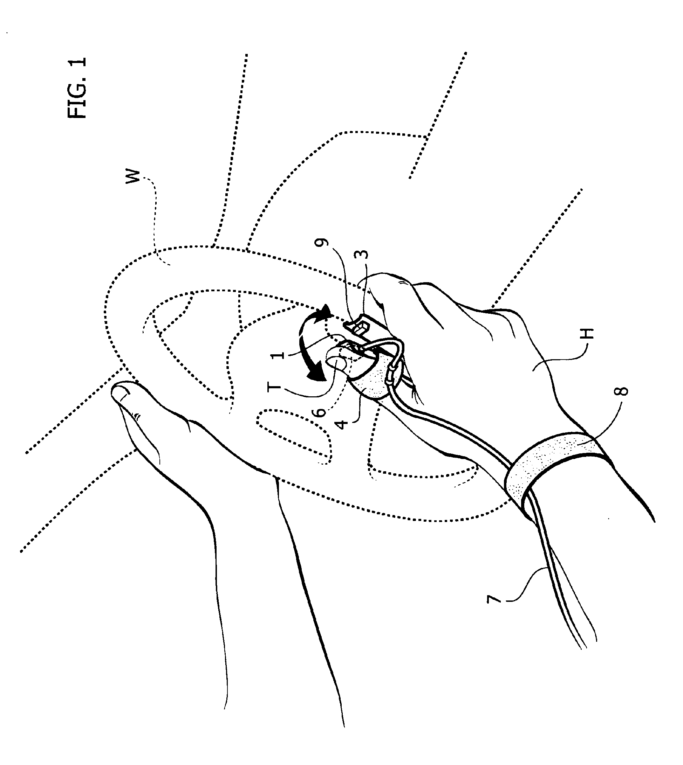

The lever 1 is provided for being applied in a removable but stable way to the finger of a hand H, whether right or left, and preferably to the thumb T, of a user, i.e., of a driver for which manual actuation is rendered necessary instead of use of the accelerator pedal. For this application, the lever 1 may for example be equipped with a band 4 provided with a microhook closing system 5 or a system of an equivalent type, provided for girding the finger T of the hand H of the driver, in the way represented schematically in Figure 1, the back of which is conveniently received within the concavity of the lever 1.

The manual control device according to the invention includes an angular-position transducer provided for detecting the relative angular position between the lever 1 and the base 3, converting it into digital electrical signals. This angular-position transducer may be of any conventional type, for example of a capacitive/inductive, potentiometric, optical, piezoelectric type, or else, more conveniently, of a magnetic type based upon the Hall effect.

In the case of the example illustrated, the transducer is precisely a Hall-effect transducer and includes an active element 6 applied on the lever 1 and co-operating with a permanent magnet 9 fixed on the base 3 and functioning also as end-of-travel member for the lever 1.

The angular-position transducer 6 may in turn be operatively connected to an electrical or electronic system for actuating the accelerator in response to the detected angular position of the lever 1. Also the electrical or electronic system for actuating the accelerator is of a conventional type, and hence will not be described in detail herein: it may, for example, be similar to what is described and illustrated in the aforementioned European patent No. EP-0699552B1, filed in the name of Haag.

The connection between the angular-position transducer 6 and the system for actuating the accelerator can be obtained via an electric wire 7, for example constrained to the arm of the driver via a further band 8, or else - more conveniently - in wireless mode, with technologies that are also well known to the person skilled in the branch.

In use, and as is represented schematically in Figure 1, the driver to whose thumb T the manual control device according to the invention is applied in the way clarified above will normally grip the steering wheel W of the vehicle also with his hand H, as well as with the other free hand, resting the base 3 of the device against the steering wheel W itself, which in this way forms a reaction surface. Then, by moving the thumb T he will exert more or less pressure on the lever 1, positioning it angularly according to the degree of acceleration that he wishes to impart on the vehicle through the angular-position transducer 6 and the connection of this to the electrical or electronic system for actuating the accelerator.

It will emerge clearly from the foregoing description how the manual control device according to the invention presents an extreme simplicity, both from the constructional standpoint and thanks to the fact that it does not require any operation of installation on board the vehicle that calls for any structural intervention. Moreover, it is able to guarantee a high degree of comfort and practicality of use together with the maximum degree of safety, considering that its implementation does not prevent the driver from gripping the steering wheel firmly with both hands. Furthermore, it does not interfere in any way with the airbag normally incorporated in the steering wheel of the vehicle.

Of course, the details of construction and the embodiments of the device may vary widely with respect to what has been described and illustrated herein, without thereby departing from the scope of the present invention as defined in the ensuing claims.

For example, according to variants of the invention (not illustrated), the control device may be applied to the driver's index finger instead of his thumb, or else it may be permanently connected to a glove that in turn can be worn by the user. Moreover, as already specified, the angular-position transducer incorporated in the control device may be of any suitable type, and two transducers may even be provided in parallel so as to ensure redundancy.

Finally, it should be pointed out that, even though in the case of the example described and illustrated the reaction surface for resting of the base 3 of the control device is constituted by the steering wheel W of the vehicle, said reaction surface may be constituted by a different part, for example by the structure of the driving seat, etc. This solution is, however, less advantageous in so far as it obviously does not enable the driver to grip the steering wheel of the vehicle with both hands.

## Claims

1. A device for manual control of the accelerator of a motor vehicle, in particular for disabled drivers, comprising a mobile actuating member (1) operatively connected to an electrical or electronic system for actuating the accelerator in response to the position of said mobile member **(1),** said device being **characterized in that** the mobile member (1) is configured for being removably and stably applied to a finger (T) of a hand (H) of the driver and is connected to a resting base (3) that can be positioned against a reaction surface preferably constituted by the steering wheel (W) of the vehicle.

2. The manual control device according to Claim 1, **characterized in that** the mobile member is constituted by a thrust lever (1) articulated to said resting base (3) for actuation of an angular-position transducer (6).

3. The manual control device according to Claim 2, **characterized in that** said angular-position transducer (6) preferably comprises a Hall-effect sensor.

4. The manual control device according to Claim 1 or Claim 2, **characterized in that** said angular-position transducer (6) is operatively connected to said electrical or electronic system for actuating the accelerator via an electric wire (7).

5. The manual control device according to Claim 1 or Claim 2, **characterized in that** said angular-position transducer (6) is operatively connected to said electrical or electronic system for actuating the accelerator in wireless mode.

6. The manual control device according to any one of the preceding claims, **characterized in that** said mobile member (1) is provided with an adjustable closing band (4) around the finger (T) of the hand (H) of the driver.

7. The manual control device according to Claim 6, **characterized in that** said adjustable closing band (4) may be applied to the thumb (T) of the hand (H) of the driver.

8. The manual control device according to Claim 7, **characterized in that** said mobile member (1) is shaped like a cradle to accommodate the thumb (T) of the hand (H) of the driver.

9. The manual control device according to any one of Claims 1 to 5, **characterized in that** said mobile member (1) is applied to a glove that can be worn by the driver.

## Patentansprüche

1. Vorrichtung zur Handbedienung eines Kraftfahrzeugbeschleunigers, insbesondere für behinderte Fahrer, umfassend ein mit einem elektrischen oder elektronischen System wirkverbundenes mobiles Betätigungsglied (1) zum Betätigen des Beschleunigers in Reaktion auf die Position des mobilen Glieds (1), wobei die Vorrichtung **dadurch gekennzeichnet ist, dass** das mobile Glied (1) gestaltet ist, abnehmbar und stabil auf einen Finger (T) einer Hand (H) des Fahrers angewandt zu werden, und mit einer Auflagefläche (3) verbunden ist, die gegen eine Reaktionsfläche, welche vorzugsweise durch das Lenkrad (W) des Fahrzeugs gebildet ist, positionierbar ist.

2. Handbedienungsvorrichtung nach Anspruch 1, **dadurch gekennzeichnet, dass** das mobile Glied durch einen an der Auflagefläche (3) angelenkten Schubhebel (1) zur Betätigung eines Winkelstellungsgebers (6) gebildet ist.

3. Handbedienungsvorrichtung nach Anspruch 2, **dadurch gekennzeichnet, dass** der Winkelstellungsgeber (6) vorzugsweise einen Hallsensor umfasst.

4. Handbedienungsvorrichtung nach Anspruch 1 oder Anspruch 2, **dadurch gekennzeichnet, dass** der Winkelstellungsgeber (6) über ein elektrisches Kabel (7) mit dem elektrischen bzw. elektronischen System zum Betätigen des Beschleunigers wirkverbunden ist.

5. Handbedienungsvorrichtung nach Anspruch 1 oder Anspruch 2, **dadurch gekennzeichnet, dass** der Winkelstellungsgeber (6) in drahtloser Weise mit dem elektrischen bzw. elektronischen System zum Betätigen des Beschleunigers wirkverbunden ist.

6. Handbedienungsvorrichtung nach einem der vorangehenden Ansprüche, **dadurch gekennzeichnet, dass** das mobile Glied (1) mit einem um den Finger (T) der Hand (H) des Fahrers einstellbaren Verschlussband (4) bereitgestellt ist.

7. Handbedienungsvorrichtung nach Anspruch 6, **dadurch gekennzeichnet, dass** das einstellbare Verschlussband (4) auf den Daumen (T) der Hand (H) des Fahrers anwendbar ist.

8. Handbedienungsvorrichtung nach Anspruch 7, **dadurch gekennzeichnet, dass** das mobile Glied (1) wiegenförmig ist, um den Daumen (T) der Hand (H) des Fahrers aufzunehmen.

9. Handbedienungsvorrichtung nach einem der Ansprüche 1 bis 5, **dadurch gekennzeichnet, dass** das mobile Glied (1) auf einen Handschuh angewandt wird, der vom Fahrer getragen werden kann.

## Revendications

1. Dispositif pour la commande manuelle de l'accélérateur d'un véhicule à moteur, en particulier pour les conducteurs handicapés, comprenant un élément d'actionnement mobile (1) raccordé de manière opérationnelle à un système électrique ou électronique pour actionner l'accélérateur en réponse à la position dudit élément mobile (1), ledit dispositif étant **caractérisé en ce que** l'élément mobile (1) est configuré pour être appliqué de manière amovible et stable sur un doigt (T) d'une main (H) du conducteur et est raccordé à une base d'appui (3) qui peut être positionnée contre une surface de réaction constituée de préférence par le volant (W) du véhicule.

2. Dispositif de commande manuelle selon la revendication 1, **caractérisé en ce que** l'élément mobile est constitué par un levier de poussée (1) articulé par rapport à ladite base d'appui (3) pour l'actionnement d'un transducteur de position angulaire (6).

3. Dispositif de commande manuelle selon la revendication 2, **caractérisé en ce que** ledit transducteur de position angulaire (6) comprend de préférence un capteur à effet Hall.

4. Dispositif de commande manuelle selon la revendication 1 ou la revendication 2, **caractérisé en ce que** ledit transducteur de position angulaire (6) est raccordé de manière opérationnelle audit système électrique ou électronique pour actionner l'accélérateur via un fil électrique (7).

5. Dispositif de commande manuelle selon la revendication 1 ou la revendication 2, **caractérisé en ce que** ledit transducteur de position angulaire (6) est raccordé de manière opérationnelle audit système électrique ou électronique pour actionner l'accélérateur en mode sans fil.

6. Dispositif de commande manuelle selon l'une quelconque des revendications précédentes, **caractérisé en ce que** ledit élément mobile (1) est prévu avec une bande de fermeture ajustable (4) autour du doigt (T) de la main (H) du conducteur.

7. Dispositif de commande manuelle selon la revendication 6, **caractérisé en ce que** ladite bande de fermeture ajustable (4) peut être appliquée sur le pouce (T) de la main (H) du conducteur.

8. Dispositif de commande manuelle selon la revendication 7, **caractérisé en ce que** ledit élément mobile (1) est formé comme un berceau pour loger le pouce (T) de la main (H) du conducteur.

9. Dispositif de commande manuelle selon l'une quelconque des revendications 1 à 5, **caractérisé en ce que** ledit élément mobile (1) est appliqué sur un gant qui peut être porté par le conducteur.
